# EUROPÄISCHE PATENTANMELDUNG

(11) **EP 3 916 256 A1**
(43) Veröffentlichungstag der Anmeldung: **01.12.2021**
(21) Anmeldenummer: 20177027.8
(22) Anmeldetag: 28.05.2020
(51) Int. Cl.: F16C 17/24, G01N 27/20

(54) **VERSCHLEISSSENSOR, ÜBERWACHUNGSSYSTEM, LAGERANORDNUNG UND PLANETENGETRIEBE**

(71) Anmelder: Flender GmbH, 46395 Bocholt (DE)
(72) Erfinder: Dinter, Ralf Martin, 45888 Gelsenkirchen (DE)
(74) Vertreter: Michalski Hüttermann & Partner Patentanwälte mbB

(57) **Zusammenfassung**

Die Erfindung betrifft einen Verschleißsensor (10) für eine verschleißbehaftete Komponente (20), der eine Mehrzahl an Kontaktschichten (12, 12.1, 12.2, 12.3, 12.n) umfasst, die zu einem Erfassen eines vorliegenden Verschleißzustands sequentiell verschleißbar angeordnet sind. Erfindungsgemäß sind zumindest zwei Kontaktschichten (12, 12.1, 12.2, 12.3, 12.n) zu einem teilweise gleichzeitigen Verschleißen angeordnet. Die Erfindung betrifft auch ein Verfahren (100), durch das mit einem derartigen Verschleißsensor (10) ein Verschleißzustand an der verschleißbehafteten Komponente (20) ermittelbar ist. Ferner betrifft die Erfindung ein Überwachungssystem (70) mit einem entsprechenden Verschleißsensor (10) und eine Lageranordnung (50), in der ein solcher Verschleißsensor (10) eingesetzt wird.

## Beschreibung

Die Erfindung betrifft einen Verschleißsensor und ein Überwachungssystem, das einen solchen Verschleißsensor aufweist. Die Erfindung betrifft ebenso ein Verfahren zum Erfassen eines Verschleißzustandes, das mit dem erfindungsgemäßen Verschleißsensor durchführbar ist. Ebenso betrifft die Erfindung eine Lageranordnung, die mit einem erfindungsgemäßen Überwachungssystem ausgestattet ist und ein Planetengetriebe mit einer derartigen Lageranordnung. Des Weiteren betrifft die Erfindung ein Computerprogrammprodukt, mit dem ein Betriebsverhalten des Verschleißsensors simulierbar ist.

Die Druckschrift US 2012/043980 A1 offenbart einen Verschleißsensor, der eine Mehrzahl an elektrischen Elementen umfasst, die als Widerstände, Kondensatoren, Halbleiter, Spulen oder Kombinationen hiervon ausgebildet sein können. Die elektrischen Komponenten sind in einer Parallelschaltung miteinander verbunden und zu einem aufeinanderfolgenden Verschleißen im Verschleißsensor ausgebildet. Die sich so ergebende Änderung einer elektrischen Größe im Sensor erlaubt es, ein Fortschreiten einer Verschleißfront zu ermitteln.

Aus der Patentschrift US 9 389 195 B2 ist ein Sensor zur Verschleißmessung bekannt, der in einem Gleitlager radial einbaubar ist. Der Sensor umfasst eine Mehrzahl an elektrisch leitfähigen Elektroden, die im Betrieb verschlissen werden.

In unterschiedlichsten technischen Gebieten werden in Vorrichtungen verschleißbehaftete Komponenten eingesetzt. Ein vorzeitiger Ausfall dieser verschleißbehafteten Komponenten kann zu Ausfallzeiten dieser Vorrichtungen führen. Verschleißmechanismen sind schwierig aus Betriebsdaten dieser Komponenten vorherzusagen, so dass ein prinzipieller Bedarf an Verschleißsensoren besteht, die einen vorliegenden Verschleißzustand einer möglichst direkt erfassen können. Um die technisch sinnvoll nutzbare Lebensdauer einer verschleißbehafteten Komponente voll ausschöpfen zu können, besteht der Wunsch nach einem möglichst präzisen Verschleißsensor. Ebenso werden hohe Anforderungen an dessen Zuverlässigkeit gestellt und eine einfache und kosteneffiziente Bauweise angestrebt. Der Erfindung liegt die Aufgabenstellung zugrunde, einen Verschleißsensor bereitzustellen, der in zumindest einem der skizzierten Punkte eine Verbesserung bietet.

Die Aufgabenstellung wird durch einen erfindungsgemäßen Verschleißsensor gelöst, der zum Erfassen eines vorliegenden Verschleißzustandes an einer verschleißbehafteten Komponente ausgebildet ist. Der Verschleißsensor umfasst eine Mehrzahl an Kontaktschichten, die elektrisch leitend ausgebildet sind und im Wesentlichen flächig quer zu einer Verschleißrichtung, in die eine Verschleißfront fortschreitet, ausgebildet. Die Kontaktflächen sind, bezogen auf die Verschleißrichtung, sequentiell verschleißbar angeordnet. Dazu sind die Kontaktschichten, entlang der Verschleißrichtung, hintereinander angeordnet. Durch ein Verschleißen einer Kontaktschicht ist ein Stromkreis unterbrechbar, der mit einer passiven elektrischen Komponente versehen ist. Durch das Unterbrechen des Stromkreises entfällt ein Einfluss der passiven elektrischen Komponente auf eine erfassbare elektrische Größe, so dass ein Fortschreiten der Verschleißfront ermittelbar ist.

Erfindungsgemäß sind zumindest zwei Kontaktschichten im Verschleißsensor derart angeordnet, dass sie zu einem teilweise gleichzeitigen Verschleißen positioniert sind. Bei einem Fortschreiten der Verschleißfront wird zunächst eine erste Kontaktschicht teilweise verschlissen. Dabei bleibt der Stromkreis, mit dem die erste Kontaktschicht verbunden ist, geschlossen. Durch ein weiteres Fortschreiten der Verschleißfront wird auch eine zweite Kontaktschicht teilweise verschlissen. Bei einem weiteren Fortschreiten der Verschleißfront durch die erste Kontaktschicht durch ein Verschleißgegenstück im Wesentlichen zerstört, so dass der entsprechend Stromkreis unterbrochen wird. Dadurch, dass dann die zweite Kontaktschicht schon teilweise verschlissen, also durch das Verschleißgegenstück beschädigt ist, wird die zweite Kontaktschicht, bei gleichmäßigem Fortschreiten der Verschleißfront, relativ kurz nach der ersten Kontaktschicht verschlissen. Die zweite Kontaktschicht ist auch mit einem Stromkreis mit einer passiven elektrischen Komponente versehen, so dass durch das Verschleißen der zweiten Kontaktschicht auch deren entsprechender Stromkreis unterbrochen wird. Auch dadurch wird eine erfassbare Änderung einer elektrischen Größe hervorgerufen. Dementsprechend ist der erfindungsgemäße Verschleißsensor dazu ausgebildet, in einer feinen Abstufung das Fortschreiten der Verschleißfront in der verschleißbehafteten Komponente abzubilden und so eine präzise Information darüber bereitzustellen. Kontaktschichten sind in einfacher Weise in erhöhter Anzahl bereitstellbar, so dass im erfindungsgemäßen Verschleißsensor eine erhöhte Messgenauigkeit erzielbar ist.

In einer Ausführungsform des beanspruchten Verschleißsensors sind die zumindest zwei Kontaktschichten senkrecht zur Verschleißrichtung teilweise gegenüberliegend angeordnet. Dabei liegen sich Seitenflächen der zumindest zwei Kontaktschichten, also die Flächen, die durch eine Kante und eine Schichtdicke der Kontaktschicht definiert sind, in einer Projektion senkrecht zur Verschleißrichtung, also im Wesentlichen parallel zur Verschleißfront, teilweise überlappend gegenüber. Dadurch sind die zumindest zwei Kontaktschichten, im Hinblick auf das Fortschreiten der Verschleißfront, im Wesentlichen gestuft ausgebildet. Eine der zumindest zwei Kontaktschicht wird so in einfacher Weise vor der anderen Kontaktschicht durch das Fortschreiten der Verschleißfront beschädigt. Ebenso wird die zuerst beschädigte Kontaktschicht auch vor der anderen Kontaktschicht verschlissen und der entsprechende Stromkreis getrennt. Die teilweise gegenüberliegende Anordnung der zumindest zwei Kontaktschichten ist durch ein entsprechendes Einstellen von Schichtdicken dieser Kontaktschichten und deren Positionierung entlang der Verschleißrichtung herstellbar. Des Weiteren können auch mehr als zwei Kontaktschichten in einfacher Weise derart im beanspruchten Verschleißsensor positioniert werden. Dementsprechend kann die erzielbare Messgenauigkeit über eine wählbare Verschleißstrecke durchgängig gewährleistet werden. Ferner ist die erzielbare Messgenauigkeit durch Auswahl der entsprechenden Fertigungstechnik anpassbar und ohne Weiteres bei künftige, noch präziseren Fertigungstechniken, weiter steigerbar.

Darüber hinaus kann die verschleißbehaftete Komponente, für die der beanspruchte Verschleißsensor ausgelegt ist, eine Gleitlagerkomponente sein. Unter einer Gleitlagerkomponente ist hierbei jegliche Komponente zu verstehen, an deren Oberfläche im bestimmungsgemäßen Betrieb ein Schmierstofffilm ausgebildet ist, durch den die Bewegung des Gleitlagers unterstützt wird. Dies können beispielsweise eine Lagerbuchse oder darin aufgenommene Achse oder Welle sein. Der beanspruchte Verschleißsensor bietet ein hohe Messgenauigkeit, die es auch bei den verhältnismäßig geringen Verschleißstrecken von Gleitlagerkomponenten erlaubt, hinreichend präzise den vorliegenden Verschleißzustand zu erfassen. Mittels des beanspruchten Verschleißsensors ist der vorliegende Verschleißzustand unmittelbar genau erfassbar, so dass die technisch sinnvolle Lebensdauer eines Gleitlagers weiter ausschöpfbar ist. Dies ermöglicht einen zuverlässigen und gleichzeitig wirtschaftlichen Betrieb von Vorrichtungen, die über Gleitlager verfügen. Insbesondere kann der beanspruchte Verschleißsensor an einer Werkzeugmaschine eingesetzt werden und durch Vermessen deren verschleißbehafteter Komponenten eine Vorhersage zu treffen, mit welcher Fertigungspräzision die Werkzeugmaschine noch arbeiten kann. Dadurch können bestehende Werkzeugmaschinen über ihre gesamte Lebensdauer weiterhin rationell eingesetzt werden.

Ferner können im beanspruchten Verschleißsensor die zumindest zwei Kontaktschichten über einen Zentralkontakt elektrisch miteinander verbunden sein. Der Zentralkontakt gehört zu jedem Stromkreis, der in einem zerstörungsfreien Zustand vorliegt, in dem der Verschleißsensor seinen Betrieb aufnimmt. Folglich wird der elektrische Aufbau des beanspruchten Verschleißsensors vereinfacht und in materialsparender Weise bereitgestellt. Der Zentralkontakt kann dabei als länglicher Kontakt entlang der Verschleißrichtung ausgebildet sein, beispielsweise in Stabform.

In einer weiteren Ausführungsform des beanspruchten Verschleißsensors können die zumindest zwei Kontaktschichten im Wesentlichen schraubenlinienförmig angeordnet sein. Beispielsweise können die Kontaktschichten rechteckig, winkelförmig oder kreisstückförmig ausgebildet sein und um den Zentralkontakt in wendeltreppenförmig positioniert sein. Dabei sind die zumindest zwei Kontaktflächen, bezogen auf eine Hauptachse des Verschleißsensors entlang der Verschleißrichtung, in unterschiedliche Richtungen weisend angeordnet. Die schraubenlinienförmige Anordnung der zumindest zwei Kontaktschichten bietet eine einfache und gleichzeitig kompakte Anordnung dieser. Es wird im Wesentlichen eine Rotationssymmetrie hergestellt, durch die eine gleichmäßige Beanspruchung der einzelnen Kontaktschichten während des Fortschreitens der Verschleißfront gewährleistet ist. Dementsprechend wird die erhöhte Messgenauigkeit des Verschleißsensors so über im Wesentlichen die gesamte Verschleißstrecke bereitgestellt.

Alternativ oder ergänzend können die zumindest zwei Kontaktschichten jeweils in einem separaten Stapel an Kontaktschichten angeordnet sein. Unter einem Stapel ist hierbei entlang der Verschleißrichtung aus alternierenden Kontaktschichten und Isolationsschichten zu verstehen. Die Stapel sind dabei entlang der Verschleißrichtung versetzt positioniert, so dass sich darin jeweils Kontaktschichten teilweise gegenüberliegen. Derartige Stapel können als vorgefertigte Komponenten ausgebildet sein, die bei der Herstellung des Verschleißsensors mit einem einstellbaren Versatz montierbar sind. Dadurch wird die Anzahl an Fertigungsschritten, die erhöhte Präzision erfordern, reduziert, da lediglich eine Montagemöglichkeit mit entsprechendem Versatz bereitzustellen ist. Dementsprechend können Kontaktschichten und/oder Isolationsschichten mit einer erhöhten Schichtdicke gefertigt werden, da die gewünschte Messgenauigkeit vorrangig vom Einstellen des Versatzes abhängig ist. Der beanspruchte Verschleißsensor ist folglich schnell und kosteneffizient herstellbar.

Des Weiteren kann zumindest eine der Kontaktschichten und/ oder zumindest eine Isolationsschicht im beanspruchten Verschleißsensor mittels Additiver Fertigung hergestellt sein. Unter Additiver Fertigung ist dabei beispielsweise 3D-Druck zu verstehen. Durch Additive Fertigung ist die Form der Kontaktschichten und/oder Isolationsschichten in einfacher Weise an die konstruktiven Gegebenheiten für den Verschleißsensor anpassbar. Der beanspruchte Verschleißsensor ist dadurch an eine Vielzahl an Anwendungen adaptierbar und weist ein breites Einsatzspektrum auf. Insbesondere sind durch Additive Fertigung auch filigrane Formen herstellbar. Da Additive Fertigungsverfahren typischerweise schichtweise ein herzustellendes Bauteil aufbauen, ist der geschichtete Aufbau des beanspruchten Verschleißsensors für derartige Fertigungsverfahren besonders geeignet. Darüber hinaus bieten Additive Fertigungsverfahren eine hinreichende Präzision, die für Sensoren notwendig ist und eine belastbare Kombination von unterschiedlichen Materialien, beispielsweise von Kunststoff und Metall. Derartige sensorspezifische Fertigungstechniken sind beispielsweise aus der Pressemitteilung "Mit Laserlicht zur gedruckten Elektronikvielfalt" vom 27.03.2019 von Fraunhofer-Institut für Lasertechnik, kurz ILT, bekannt. Darin wird die Herstellung von Dehnungsmessstreifen mittels Additiver Fertigung skizziert.

In einer weiteren Ausführungsform des beanspruchten Verschleißsensors ist diesem zumindest ein Erfassungsmittel zugeordnet, das zu einem Erfassen zumindest einer elektrischen Größe ausgebildet ist. Das Erfassungsmittel kann beispielsweise als Messvorrichtung für elektrische Größen Spannung, Stromstärke, Widerstand, Induktivität, Kapazität oder Impedanz ausgebildet sein. Das Erfassungsmittel ist dabei zumindest einem Stromkreis zugeordnet, in dem eine passive elektrische Komponente angeordnet ist, durch die die jeweils zu messende elektrische Größe beeinflussbar ist. Dies können beispielsweise Widerstände, Kondensatoren, Spulen oder auch Kombination hieraus sein. Der zumindest eine Stromkreis, dem das Erfassungsmittel zugeordnet ist, ist im Betrieb des Sensors durch das Verschleißgegenstück verschleißbar, also unterbrechbar. Die damit einhergehende Änderung der entsprechenden elektrischen Größe wird mit dem Erfassungsmittel gemessen, also erfasst, und somit das Fortschreiten der Verschleißfront. Das Erfassungsmittel kann im Verschleißsensor integriert sein oder als separate Komponente ausgebildet sein, die austauschbar ist, ohne dass dazu der Verschleißsensor von der verschleißbehafteten Komponente zu lösen ist. Für eine Vielzahl an elektrischen Größen sind kompakte und kosteneffiziente Erfassungsmittel verfügbar. Ferner ist durch eine geeignete Dimensionierung der passiven elektrischen Komponenten eine betragsmäßig hohe Änderung der korrespondierenden elektrischen Größe hervorrufbar. Folglich sind das Unterbrechen einer Kontaktschicht auch mit einem einfach Erfassungsmittel mit reduzierter Messgenauigkeit zuverlässig erkennbar. Als Erfassungsmittel kann dadurch auch ein einfaches und kosteneffizientes Erfassungsmittel gewählt werden, ohne die Messgenauigkeit des Verschleißsensors zu beeinträchtigen. Der beanspruchte Verschleißsensor verwirklicht dadurch in besonderem Maße das Konzept einer Diskretisierung der zu messenden Größe. Des Weiteren können zumindest zwei passive elektrische Komponenten miteinander zu einer Reihenschaltung verbunden sein. Die Reihenschaltung ist derart ausgebildet, dass mit dem Zerstören jeder der Kontaktschichten diese für die elektrische Größe wirksam wird, die von der Messvorrichtung zu erfassen ist. Dadurch ist eine eindeutige und robuste Messung möglich.

Ferner kann im beanspruchten Verschleißsensor zumindest eine der Kontaktschichten eine Schichtdicke von 100nm bis 1000nm aufweisen, bevorzugt von 400nm bis 600nm. Kontaktschichten mit derartigen Schichtdicken sind weiterhin gezielt um einen Bruchteil ihrer Schichtdicke in Verschleißrichtung versetzt herstellbar. Dementsprechend wird eine erhöhte Messgenauigkeit beim beanspruchten Verschleißsensor erzielt. Insbesondere wird so ein Einsatz in Anwendungen wie Gleitlagern ermöglicht, bei denen die verschleißbehaftete Komponente während deren technisch sinnvoll nutzbarer Lebensdauer nur ein relativ kurzer Verschleißweg durchlaufen wird.

Die skizzierte Aufgabenstellung wird ebenso durch das erfindungsgemäße Verfahren zum Erfassen eines Verschleißzustands einer verschleißbehafteten Komponente gelöst. Darin wird ein Verschleißsensor eingesetzt, der der verschleißbehafteten Komponente zugeordnet ist. In einem ersten Schritt wird ein Betrieb, beispielsweise ein bestimmungsgemäßer Betrieb, der verschleißbehafteten Komponente im Zusammenspiel mit einem Verschleißgegenstück hergestellt. Durch das Verschleißgegenstück wird an der verschleißbehafteten Komponente eine Verschleißfront ausgebildet, die im Laufe des Betriebs in eine Verschleißrichtung fortschreitet. In einem zweiten Schritt erfolgt ein Verschleißen einer ersten Kontaktschicht, die zum Verschleißsensor gehört. Durch ein Zusammenwirken des Verschleißgegenstücks mit der ersten Kontaktschicht wird diese im Wesentlichen sukzessive zerstört, also verschlissen. In einem dritten Schritt erfolgt ein Verschleißen einer zweiten Kontaktschicht, die entlang der Verschleißrichtung hinter der ersten Kontaktschicht angeordnet ist und auch zum Verschleißsensor gehört. Das Verschleißgegenstück, also die Verschleißfront, erreicht im vorliegenden Betrieb die zweiter Kontaktschicht und sukzessive zerstört auch diese. In einem vierten Schritt erfolgt ein Erfassen zumindest einer elektrischen Größe in zumindest einem Stromkreis, der die erste und/oder zweite Kontaktschicht umfasst. Solange die erste bzw. zweite Kontaktschicht vom Verschleißgegenstück noch nicht vollständig verschlissen ist, also noch nicht durchtrennt, liegt ein intakter Stromkreis vor und die korrespondierende elektrische Größe bleibt im Wesentlichen konstant. In einem fünften Schritt erfolgt ein Erkennen eines Fortschreitens der Verschleißfront anhand der zumindest einen elektrischen Größe, wenn die erste und/oder zweite Kontaktschicht vom Verschleißgegenstück durchtrennt ist. Das Durchtrennen des entsprechenden Stromkreises ruft eine Änderung in der Auswirkung einer dem entsprechenden Stromkreis zugeordneten passiven elektrischen Komponente hervor. Dies wiederum ist beispielsweise mit einem geeigneten Erfassungsmittel, das dem Verschleißsensor zugeordnet ist, erfassbar.

Erfindungsgemäß werden der zweite und dritte Schritt, in denen die erste bzw. zweite Kontaktschicht durch das Verschleißgegenstück verschlissen werden, also sukzessive zerstört werden, teilweise gleichzeitig durchgeführt. Insbesondere setzt das Verschleißen der zweiten Kontaktschicht erst dann ein, wenn das Verschleißen der ersten Kontaktschicht bereits andauert. Korrespondierend erfolgt das Durchtrennen der zweiten Kontaktschicht nach dem Durchtrennen der ersten Kontaktschicht. Dazwischen liegt eine Zeitdauer, in der die erste und zweite Kontaktschicht gleichzeitig vom Verschleißgegenstück verschlissen werden. Dementsprechend können das Durchtrennen der ersten und zweiten Kontaktschicht bei einer gleichbleibenden Fortschrittsgeschwindigkeit der Verschleißfront mit einem reduzierten zeitlichen Abstand erfolgen. Hieraus ergibt sich eine hohe Auflösung in der Erfassung des vorliegenden Verschleißzustands der verschleißbehafteten Komponente, also eine gesteigerte Messgenauigkeit. Das erfindungsgemäße Verfahren zum Erfassen des Verschleißzustands ist beispielsweise mit einem Verschleißsensor nach einer der oben dargestellten Ausführungsformen durchführbar.

In einer Ausführungsform des beanspruchten Verfahrens können die zugehörigen Schritte auch für eine zweite und dritte Kontaktschicht durchgeführt werden. Das beanspruchte Verfahren ist dadurch auf eine wählbare Anzahl an Kontaktschichten ausweitbar, die analog zur ersten und zweiten Kontaktschicht ausgebildet und angeordnet sind. Das beanspruchte Verfahren ist damit auf Verschleißsensoren beliebiger Größe, also mit beliebigen Verschleißstrecken, übertragbar. Folglich ist das Verfahren skalierbar und für eine breite Spanne an Einsatzzwecken geeignet. In einer weiteren Ausführungsform des beanspruchten Verfahrens kann die erste Kontaktschicht bereits gezielt teilweise vorabgetragen, also vorgeschädigt, sein. Dadurch wird ein definierter Ausgangszustand bereitgestellt, durch den eine anfängliche Messungenauigkeit vermieden werden kann.

Gleichermaßen wird die eingangs beschriebene Aufgabenstellung durch ein erfindungsgemäßes Überwachungssystem gelöst, das zur Verwendung an einer verschleißbehafteten Komponente ausgelegt ist. Das Überwachungssystem umfasst einen Sensor, der mit einer Auswertungseinheit verbunden ist. Der Sensor ist dabei erfindungsgemäß als Verschleißsensor nach einer der oben skizzierten Ausführungsformen ausgebildet. Alternativ oder ergänzend ist die Auswertungseinheit, die mit dem Sensor verbunden ist, dazu ausgebildet sein, ein Verfahren gemäß einer der oben dargestellten Ausführungsformen durchzuführen. Dazu kann die Auswertungseinheit eine Recheneinheit und einen Speicher zur Ausführung von Computerprogrammprodukten ausgebildet sein. Die Auswertungseinheit ist hierzu mit einem Computerprogrammprodukt ausgestattet, das zur Durchführung einer Ausführungsform des oben beschriebenen Verfahrens ausgebildet ist, insbesondere zu einem Empfangen und Verarbeiten von Messsignalen vom Sensor. Die Auswertungseinheit kann unmittelbar mit dem Sensor verbunden sein, oder als übergeordnete Auswertungseinheit ausgebildet sein, beispielsweise als Leitrechner oder Computer-Cloud.

Darüber hinaus wird die dargelegte Aufgabenstellung durch eine erfindungsgemäße Lageranordnung gelöst. Die Lageranordnung umfasst eine Achse, die eine verschleißbehaftete Komponente darstellt. Die Lageranordnung umfasst auch ein Zahnrad, das drehbar auf der Achse angeordnet ist und ein Verschleißgegenstück darstellt. Durch einen Betrieb der Lageranordnung wird durch das Zahnrad ein Verschleiß an der Achse hervorgerufen. Die Achse ist mit einem Verschleißsensor ausgestattet, durch den ein Fortschreiten einer Verschleißfront, die durch das Verschleißgegenstück hervorgerufen wird, erfassbar ist. Erfindungsgemäß ist der Verschleißsensor nach einer der oben beschriebenen Ausführungsformen ausgebildet. Alternativ oder ergänzend kann der Aufbau auf umgekehrt ausgebildet sein, also dass das Zahnrad als verschleißbehaftete Komponente dient und die Achse als Verschleißgegenstück.

Die skizzierte Aufgabenstellung wird auch durch ein erfindungsgemäßes Planetengetriebe gelöst, das einen Planetenträger umfasst. Der Planetenträger weist zumindest eine Planetenradachse auf, an der ein Planetenrad mittels einer Lageranordnung drehbar aufgenommen ist. Die Lageranordnung ist dabei erfindungsgemäß als Lageranordnung im Sinne der oben skizzierten Ausführungsform ausgebildet.

Ebenso wird die eingangs beschriebene Aufgabe durch ein erfindungsgemäßen Computerprogrammprodukt ausgebildet, durch das ein Betriebsverhalten eines Verschleißsensors in einer Lageranordnung simulierbar ist. Dabei wird das Fortschreiten einer Verschleißfront simuliert, durch die im Verschleißsensor Kontaktschichten sukzessive durch ein Verschleißgegenstück zerstört werden. Das Computerprogrammprodukt kann dazu lauffähige Simulationsroutinen für tribologische Mechanismen umfassen und Datenschnittstellen, über die Betriebsparameter, wie eine Drehzahl oder ein Ausgangszustand des Verschleißsensors vorgebbar sind, oder ein Simulationsresultat ausgebbar ist. Das Computerprogrammprodukt umfasst einen Datensatz, durch den der Verschleißsensor in der Lageranordnung abgebildet ist. Erfindungsgemäß ist der Verschleißsensor gemäß einer der oben skizzierten Ausführungsformen ausgebildet. Mittels des erfindungsgemäßen Computerprogrammprodukts ist vorhersagbar oder zumindest plausibilisierbar, ob der Verschleißsensor in einer Lageranordnung praktisch nutzbare Messergebisse liefern kann. Ferner ist der erfindungsgemäße Verschleißsensor in puncto Auslegung mittels des erfindungsgemäßen Computerprogrammprodukts anpassbar und die Lageranordnung so ohne Weiteres optimierbar. Das Computerprogrammprodukt kann dazu beispielsweise als sogenannter Digitaler Zwilling ausgebildet sein. Derartige Digitale Zwillinge sind beispielsweise in der Offenlegungsschrift US 2017/286572 A1 dargestellt. Der Offenbarungsgehalt von US 2017/286572 A1 wird durch Verweisung in die vorliegende Anmeldung mit einbezogen.

Die Erfindung wird im Folgenden anhand einzelner Ausführungsformen in Figuren näher erläutert. Die Figuren sind insoweit in gegenseitiger Ergänzung zu lesen, dass gleiche Bezugszeichen in unterschiedlichen Figuren die gleiche technische Bedeutung haben. Die Merkmale der einzelnen Ausführungsformen sind untereinander auch kombinierbar. Ferner sind die in den Figuren gezeigten Ausführungsformen mit den oben skizzierten Merkmalen kombinierbar. Es zeigen im Einzelnen:
- FIG 1: schematisch einen Gesamtaufbau einer Ausführungsform des beanspruchten Verschleißsensors;
- FIG 2: eine Detailansicht des Verschleißsensors während eines ersten Stadiums einer Ausführungsform des beanspruchten Verfahrens;
- FIG 3: eine Detailansicht des Verschleißsensors während eines zweiten Stadiums einer Ausführungsform des beanspruchten Verfahrens;
- FIG 4: eine Detailansicht des Verschleißsensors während eines dritten Stadiums einer Ausführungsform des beanspruchten Verfahrens;
- FIG 5: schematisch einen Gesamtaufbau einer zweiten Ausführungsform des beanspruchten Verschleißsensors;
- FIG 6: schematische eine Draufsicht auf eine dritte Ausführungsform des beanspruchten Verschleißsensors;
- FIG 7: schematisch einen Aufbau einer Ausführungsform der beanspruchten Lageranordnung mit einer Ausführungsform des beanspruchten Überwachungssystems.

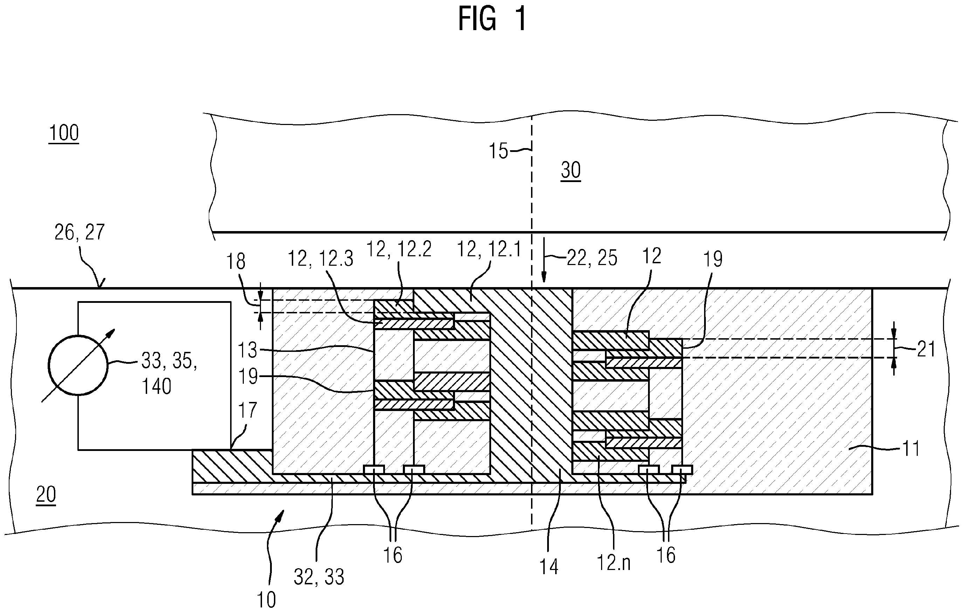

In FIG 1 ist schematisch den Gesamtaufbau einer ersten Ausführungsform des beanspruchten Verschleißsensors 10 in einer Schnittansicht dargestellt, mit dem das beanspruchten Verfahren 100 durchführbar ist. Der Verschleißsensor 10 umfasst einen Zentralkontakt 14, der im Bereich einer Hauptachse 15 des Verschleißsensors 10 angeordnet ist und aus einem leitfähigen Material, beispielsweise einem metallischen Werkstoff, hergestellt ist. Der Zentralkontakt 14 ist elektrisch mit einer Mehrzahl an Kontaktschichten 12 verbunden. Die Kontaktschichten 12 sind auch aus einem leitfähigen Material hergestellt und sind durch Isolationsschichten 11 isoliert. Der Verschleißsensor 10 ist in eine verschleißbehaftete Komponente 20 derart eingebaut, dass dieser im Wesentlichen bündig mit einer Oberfläche 26 der verschleißbehafteten Komponente 20 ist. Die verschleißbehaftete Oberfläche 26 steht im Betrieb mit einem Verschleißgegenstück 30 im Kontakt. Der Kontakt zwischen dem Verschleißgegenstück 30 und der verschleißbehafteten Komponente 20 kann ein unmittelbarer Kontakt sein oder ein mittelbarer Kontakt, bei dem beispielsweise ein nicht näher gezeigter Schmierstofffilm zwischen der verschleißbehafteten Komponente 20 und dem Verschleißgegenstück 30 vorliegt. Durch den Kontakt zwischen der verschleißbehafteten Komponente 20 und dem Verschleißgegenstück 30 wird eine Verschleißfront 27 an der Oberfläche 26 hervorgerufen, die im Betrieb entlang einer Verschleißrichtung 35 fortschreitet. Die Verschleißrichtung 25 und der Verschleißfortschritt 22 sind in FIG 1 mittels eines Pfeils versinnbildlicht. Die Kontaktschichten 12 sind im Wesentlichen flächig ausgebildet und erstrecken sich, entlang der Hauptachse 15 betrachtet, radial vom Zentralkontakt 14 weg. Die Kontaktschichten 12 weisen auch jeweils eine unterschiedliche Axialposition entlang der Hauptachse 15 auf, wobei der Versatz geringer ist als jeweils deren Schichtdicke 21. Infolgedessen liegen, senkrecht zur Hauptachse 15 betrachtet, jeweils zwei Kontaktschichten 12 einander teilweise gegenüber. Dementsprechend ist zwischen jeweils zwei Kontaktschichten 12 ein Überlappungsbereich 18 ausgebildet, in dem sich die Seitenflächen 19 teilweise gegenüberliegen. Insgesamt sind die Kontaktschichten 12 bezogen auf den Zentralkontakt 14 schraubenlinienförmig angeordnet und bilden so eine Wendeltreppenform aus. Die Kontaktschichten 12 und die dazwischenliegenden Isolationsschichten sind mittels Additiver Fertigung oder Aufdampfen herstellbar, wodurch die Form dieser in einfacher Weise anpassbar ist.

Die Kontaktschichten 12 sind jeweils mit einer Durchkontaktierung 13 verbunden, die sich im Wesentlichen parallel zur Hauptachse 15 erstrecken. Die Durchkontaktierungen 13 verbinden die Kontaktflächen 12 jeweils mit einer passiven elektrischen Komponente 16, die in einem dem Verschleißgegenstück 30 angewandten Bereich des Verschleißsensors 10 angeordnet sind. Die Kontaktierungen 13 passieren dabei andere Kontaktflächen 12 mit räumlichem Abstand. Die passiven elektrischen Komponenten 16 bilden mit den jeweiligen Kontaktflächen 12 zumindest einen Stromkreis 32 aus, in dem zumindest eine elektrische Größe 33 erfassbar ist. Die mindestens eine elektrische Größe 33 wird durch die passiven elektrischen Komponenten 16 beeinflusst. Beispielsweise können die passiven elektrischen Komponenten 16 Widerstände sein und die elektrische Größe 33 im Stromkreis 32 der Gesamtwiderstand. Der zumindest eine Stromkreis 32 verfügt über zumindest einen Messanschluss 17, über den dem Verschleißsensor 10 ein Erfassungsmittel 35 zum Erfassen der elektrischen Größe 33 zugeordnet ist. Mit dem Erfassungsmittel 35 ist in einer Ausführungsform des beanspruchten Verfahrens 100 ein vierter Schritt 140 durchführbar. Der Verschleißsensor 10 ist in seinem Aufbau, zumindest einer Materialeigenschaft seiner Komponenten und deren Verhalten bei einem Verschleißkontakt 23 mit einem einstellbaren Verschleißgegenstück 30, in einem in FIG 1 nicht näher gezeigten Computerprogrammprodukt 80 abgespeichert. Das Computerprogrammprodukt 80 erlaubt es, das Betriebsverhalten des Verschleißsensors 10 bei einem Verfahren 100 zum Erfassen des Verschleißzustands der verschleißbehafteten Komponente 20 zu simulieren.

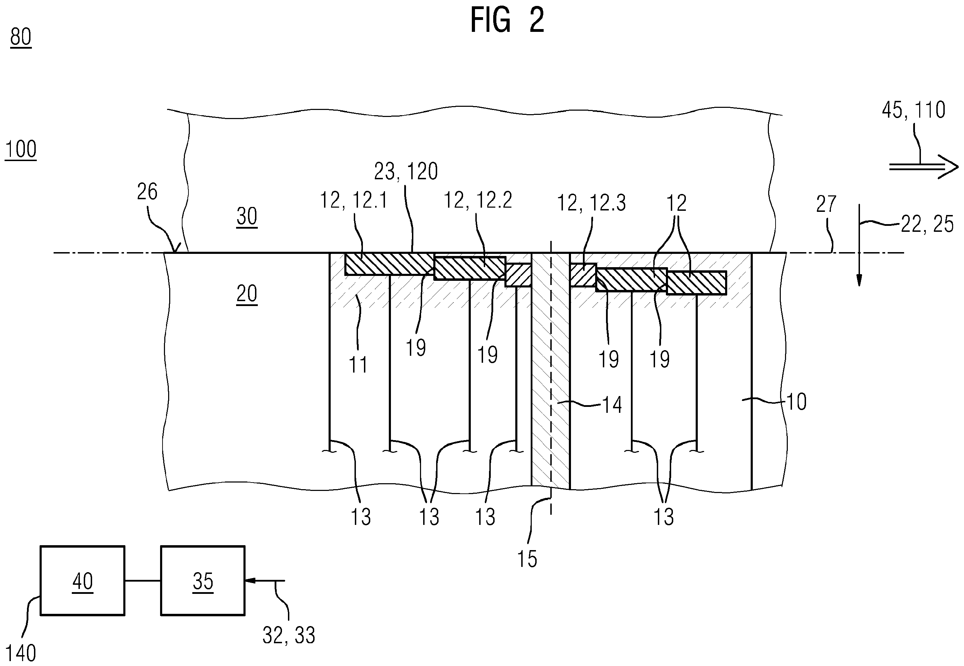

In FIG 2 ist in einer geschnittenen Detailansicht der Verschleißsensor 10 nach FIG 1 während eines ersten Stadiums einer Ausführungsform des beanspruchten Verfahrens 100 abgebildet. Dementsprechend sind FIG 1 und FIG 2 in gegenseitiger Ergänzung zu lesen. Das in FIG 1 dargestellte Stadium des Verfahrens 100 geht davon aus, dass mit der verschleißbehafteten Komponente 20 und dem Verschleißgegenstück 30 ein Betriebszustand hergestellt ist, in dem zwischen diesen eine Relativbewegung 45 durchgeführt wird, durch die die verschleißbehaftete Komponente 20 sukzessive verschlissen wird, also deren Oberfläche 26 abgerieben wird. Dementsprechend liegt ein Kontakt zwischen der verschleißbehafteten Komponente 20 und dem Verschleißgegenstück 30 vor, der unmittelbar oder mittelbar ausgebildet sein kann, und durch den eine Verschleißfront 27 definiert ist. Während des Betriebs erfolgt ein Verschleißfortschritt 22 entlang einer Verschleißrichtung 25, die im Wesentlichen parallel zu einer Hauptachse 15 des Verschleißsensors 10 ist. Während des zweiten Schritts 120 des Verfahrens 100, der in FIG 2 näher gezeigt ist, steht das Verschleißgegenstück 30 einem Verschleißkontakt mit einer ersten Kontaktschicht 12.1, die durch das Verschleißgegenstück 30 sukzessive zerstört, also verschlissen, wird. Währenddessen sind eine zweite, dritte Kontaktschicht 12.2, 12.3 weiterhin von mindestens einer Isolationsschicht 11 bedeckt. Während der in FIG 2 dargestellten ersten Stadiums des Verfahrens 100 bleibt die elektrische Größe 33, die in einem Stromkreis 32 vorliegt, mit dem die ersten Kontaktschicht 12.1 verbunden ist, im Wesentlichen konstant. Das Erfassungsmittel 35 ist dabei mit einer Auswertungseinheit 40 verbunden.

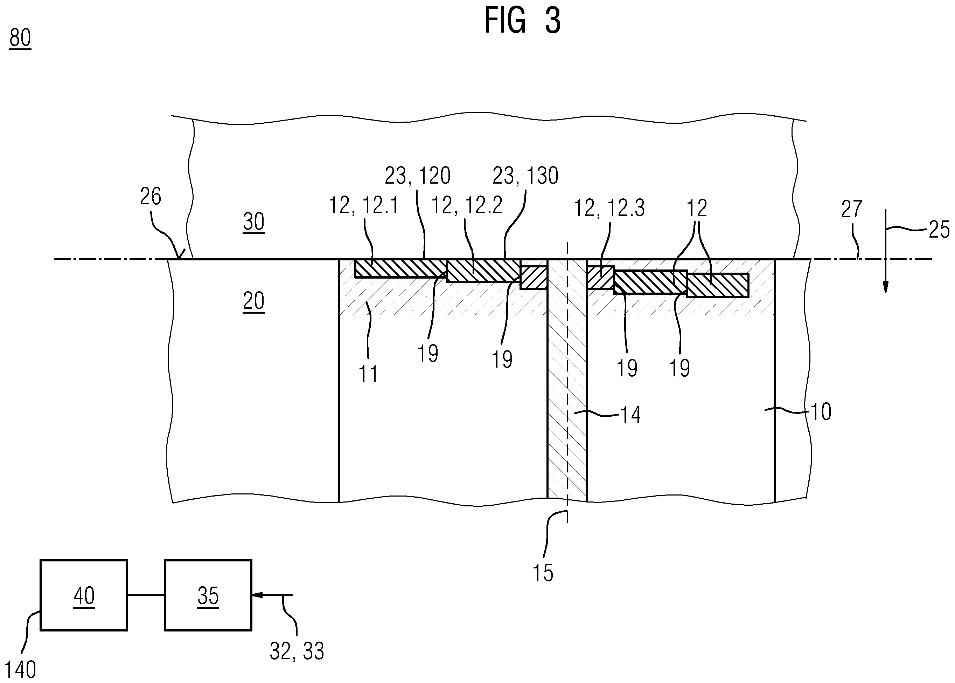

FIG 3 zeigt in einer geschnittenen Detailansicht der Verschleißsensor 10 nach FIG 1 und FIG 2 während eines zweiten Stadiums der Ausführungsform des beanspruchten Verfahrens 100 abgebildet. Das zweite Stadium, wie in FIG 3 gezeigt, tritt ein, wenn die erste Kontaktschicht 12.1 durch das Verschleißgegenstück 30 weiter verschlissen ist, bis das Verschleißgegenstück 30 eine zweite Kontaktschicht 12.2 erreicht. Während eines dritten Schritts 130 des beanspruchten Verfahrens 100 liegt somit sowohl zwischen dem Verschleißgegenstück 30 und der zweiten Kontaktschicht 12.2 und der ersten Kontaktschicht 12.1 zugleich jeweils ein Verschließkontakt 23 vor. Die Seitenflächen 19 der jeweiligen Kontaktschichten 12, 12.1, 12.2 liegen entlang der Hauptachse 15 teilweise gegenüber, so dass das Verschleißen der ersten und zweiten Kontaktschicht 12.1, 12.2 teilweise gleichzeitig erfolgt. Während des zweiten Schritts 120 und entsprechend teilweise gleichzeitig ablaufenden dritten Schritts 130 bleibt die elektrische Größe 33, die mittels des Erfassungsmittels 35 erfasst wird, im Wesentlichen konstant.

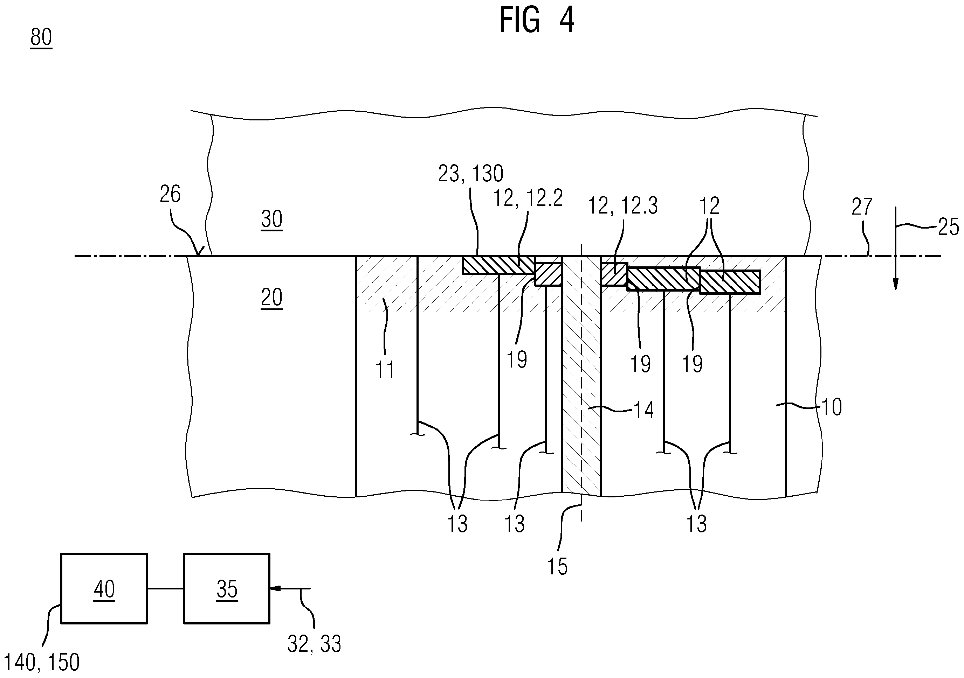

In FIG 4 ist in einer geschnittenen Detailansicht der Verschleißsensor 10 nach FIG 1 bis FIG 3 während eines dritten Stadiums der Ausführungsform des beanspruchten Verfahrens 100 dargestellt. Das in FIG 4 gezeigte dritte Stadium tritt ein, wenn die erste Kontaktschicht 12 durch den in FIG 3 abgebildeten Verschleißkontakt 23 mit dem Verschleißgegenstück 30 vollständig verschlissen, also zerstört ist. Es verleibt im dritten Stadium lediglich die zugehörige Durchkontaktierung 13 im Verschleißsensor 10. Dadurch wird ein Stromkreis 32, mit dem die erste Kontaktschicht 12.1. über die zugehörige Durchkontaktierung 13 verbunden ist, unterbrochen. Zu dem Zeitpunkt, zu dem die erste Kontaktschichte 12.1 vollständig verschlissen ist, dauert der dritte Schritt 130 an. Dem Stromkreis 32 ist auch eine nicht näher gezeigte passive Komponente 16 zugeordnet. Dementsprechend wird im Stromkreis 32 die vom Erfassungsmittel 35 erfasste elektrische Größe 33 durch die passive elektrische Komponente 16 und deren neu eingetretene Anschlusssituation verändert. Das Erfassen der der elektrischen Größe 33 erfolgt während eines vierten Schritts 140, der auch kontinuierlich während des ersten, zweiten, dritten oder fünften Schritts 110, 120, 130, 150 durchführbar ist. Durch das Erfassen der Veränderung der elektrischen Größe 33 wird der vollständige Verschleiß der ersten Kontaktschicht 12.1 erkannt und dadurch ein Fortschreiten der Lage der Verschleißfront 27 entlang der Hauptachse 15 des Verschleißsensors 10 ermittelt. Das Ermitteln des Verschleißfortschritts 22, also des Fortschreitens der Verschleißfront 27, erfolgt in einem fünften Schritt 150, der mittels einer Auswertungseinheit 40 durchgeführt wird, die mit dem Erfassungsmittel 35 verbunden ist. Das Computerprogrammprodukt 80, in dem der Verschleißsensor 10 abgebildet ist, umfasst auch Informationen über den Aufbau der elektrischen Verschaltung der passiven elektrischen Komponenten 16, der einzelnen Kontaktschichten 12, deren Widerstandsfähigkeit gegen Verschleiß. Dabei ist das Verschleißgegenstück 30 im Computerprogrammprodukt 80 in tribologischen Parametern, wie Anpresskraft, Rauhigkeit, Bewegungsgeschwindigkeit und Schmierungszustand einstellbar, beispielsweise durch eine Benutzervorgabe.

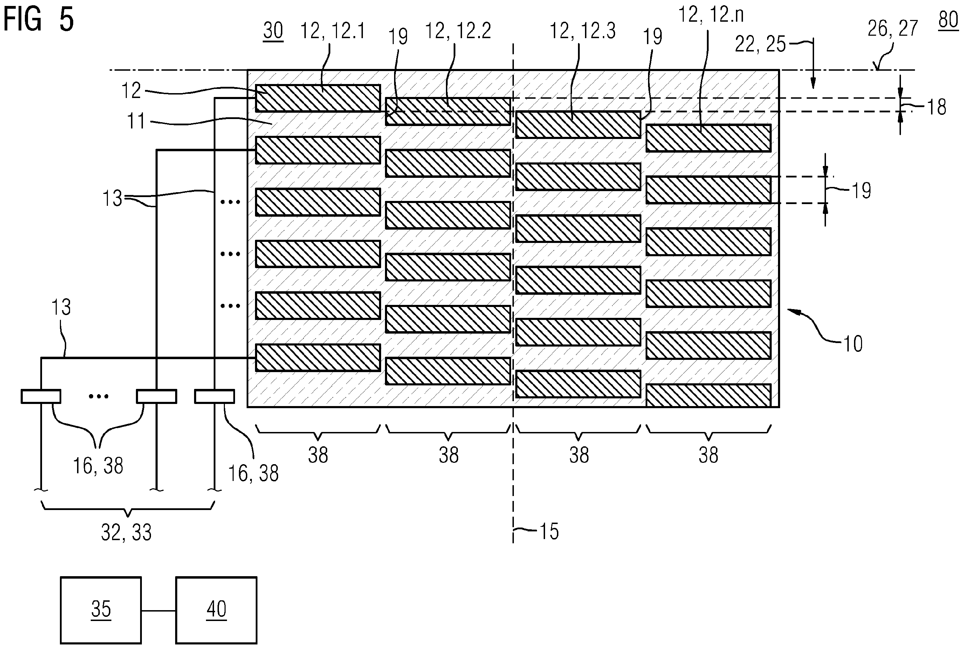

FIG 5 zeigt schematisch den Aufbau einer zweiten Ausführungsform des beanspruchten Verschleißsensors 10 in eigeschnittenen Detailansicht. Der Verschleißsensor 10 umfasst eine Mehrzahl an Kontaktschichten 12, die in Stapeln 38 angeordnet sind. Die Stapel 38 umfassen jeweils eine Mehrzahl an Kontaktschichten 12, die durch Isolationsschichten 11 voneinander getrennt sind. Mehrere Kontaktschichten 12 sind mit passiven elektrischen Komponenten 16 über Durchkontaktierungen 13 elektrisch verbunden. Die Stapel 38 sind entlang einer Hauptachse 15 des Verschleißsensors 10 ausgerichtet, die im Wesentlichen parallel zu einer Verschleißrichtung 25 ist. Der Verschleißsensor 10 ist zu einem Einbau in einer verschleißbehafteten Komponente 20 geeignet. Dabei ist der Verschleißsensor 10 bündig mit einer Oberfläche 26 der verschleißbehafteten Komponente 20 einbaubar, durch zu Beginn eines Betriebs eine Verschleißfront 27 definiert ist. Durch einen Verschleißfortschritt 22, also einem Fortschreiten der Verschleißfront 27, werden Isolationsschichten 11 und sukzessive Kontaktschichten 12 verschlissen, also zerstört. Die Stapel 38 sind entlang der Verschleißrichtung 25, und damit auch entlang der Hauptachs 15, versetzt positioniert. Dadurch liegen Seitenflächen 19 teilweise gegenüber, so dass jeweils zwischen zwei Kontaktfläche 12 ein Überlappungsbereich 18 ausgebildet ist. Infolgedessen wird durch die Kontaktflächen 12 nebeneinanderliegender Stapel 38 im Wesentlichen eine Treppenform ausgebildet. Die Stapel 38 sind baugleich ausgebildet, so dass die Überlappungsbereiche 18 im Wesentlichen die gleiche Größe aufweisen. Durch einen Verschleißfortschritt 22 erreicht die Verschleißfront 27 sukzessive eine erste Kontaktschicht 12.1, eine danebenliegende zweite Kontaktschicht 12.1, eine danebenliegende dritte Kontaktschicht 12.3 und eine danebenliegende weitere Kontaktschicht 12.n. Korrespondierend dazu werden die erste, zweite, dritte und weitere Kontaktschicht 12.1, 12.2, 12.3, 12.n nacheinander verschlissen. Dementsprechend werden nacheinander unterschiedliche passive elektrische Komponenten 16 von den entsprechenden Kontaktschichten 12.1, 12.2, 12.3, 12.n getrennt, und so eine entsprechende Änderung der elektrischen Größe 33 im zugehörigen Stromkreis 32. Die Änderung der elektrischen Größe 33 ist mittels eines geeigneten Erfassungsmittels 35 erfassbar, das mit einer Auswertungseinheit 40 verbindbar ist. Die Änderung der elektrischen Größe 33, und damit der Verschleißfortschritt 22 der Verschleißfront 27 werden durch die Auswertungseinheit 40 erfasst.

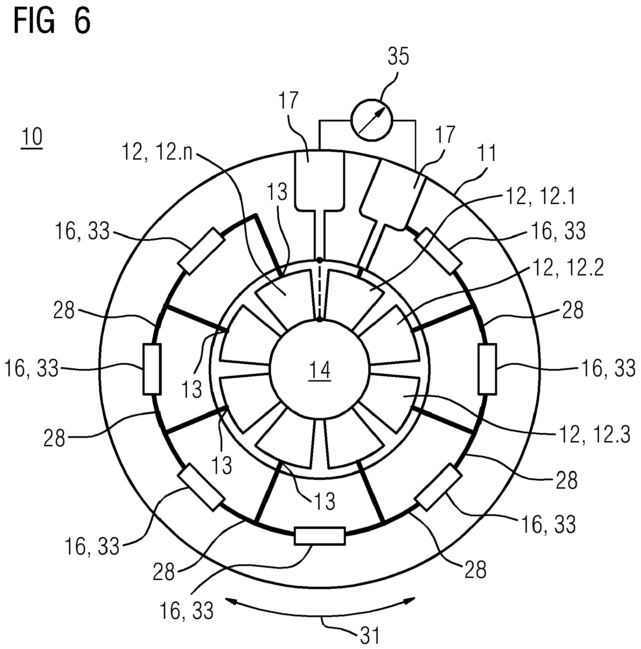

In FIG 6 ist schematisch eine dritte Ausführungsform des beanspruchten Verschleißsensors 10 in einer Draufsicht dargestellt. Der Verschleißsensor 10 wird in FIG 6 unter Auslassung von sichtsperrenden Isolationsschichten 11 auf der Ebene betrachtet, in der die passiven elektrischen Komponenten 16 angeordnet sind. Die erste, zweite, dritte Kontaktschicht 12.1, 12.2, 12.3 usw. sind bereits verschlissen, so dass lediglich im Bereich der passiven elektrischen Komponenten 16 die weitere Kontaktschicht 12.n verbleibt. Die weitere Kontaktschicht 12.n ist mit einem Zentralkontakt 14 elektrisch verbunden und über eine Durchkontaktierung 13 mit der zugehörigen passiven elektrischen Komponente 16. Die passiven elektrischen Komponenten 16 wiederum sind über Basiskontaktierungen 28 miteinander zu einer Reihenschaltung 31 verbunden. Durch das sukzessive Verschleißen der ersten, zweiten, dritten, usw. Kontaktschicht 12.1, 12.2, 12.3 werden die zugehörigen passiven elektrischen Komponenten 16 wirksam für die elektrische Größe 33, die durch eine Messvorrichtung 35 zu erfassen ist. Die Messvorrichtung 35 ist über Messanschlüsse 17 an die Reihenschaltung 31 angeschlossen.

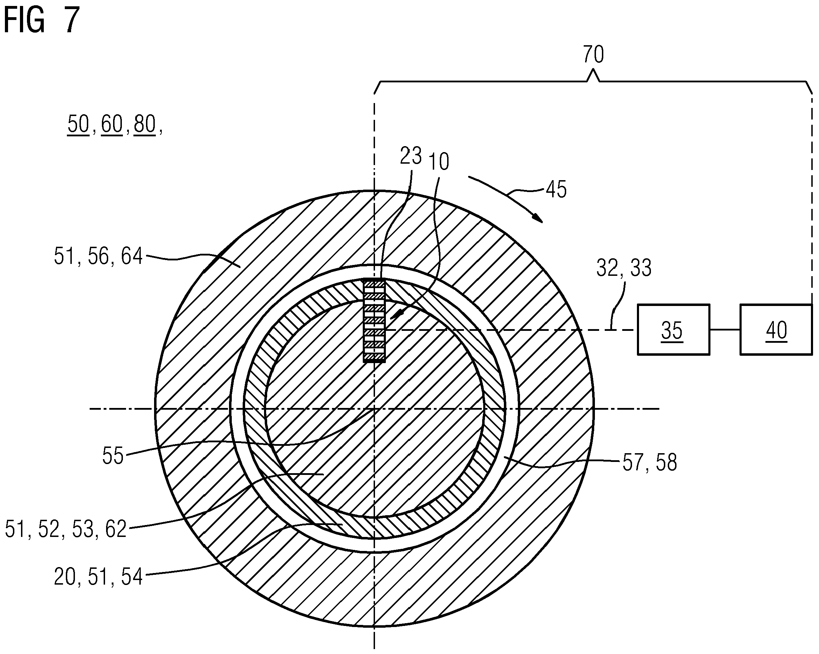

Eine Ausführungsform der beanspruchten Lageranordnung 50 ist in FIG 7 dargestellt. Die Lageranordnung 50 ist in einem nicht näher gezeigten Planetengetriebe 60 angeordnet und stellt ein Gleitlager dar. Die Lageranordnung 10 umfasst als Gleitlagerkomponenten 51 eine Achse 52, die als Planetenradachse 53 an einem nicht näher gezeigten Planetenradträger 62 ausgebildet ist. Die Achse 52 ist mit einer Lagerbuchse 54 versehen, die in der Lageranordnung 50 eine verschleißbehaftete Komponente 20 darstellt. An einer Oberfläche 26 der Lagerbuchse 54 erfolgt während des Betriebs ein Verschleiß, dessen Fortschreiten mit einem Verschleißsensor 10 zu erfassen ist. Der Verschleiß wird durch ein Zahnrad 56, das als Planetenrad 64 ausgebildet ist, hervorgerufen. Das Zahnrad 56 stellt ein Verschleißgegenstück 30 dar, durch das die verschleiObehaftete Komponente 20, also die Lagerbuchse 54, verschlissen wird. In einen Lagerspalt 58 zwischen der Lagerbuchse 54 und dem Zahnrad 56 ist ein Schmierstoff 57 einbringbar, durch den eine Relativbewegung 45 zwischen dem Zahnrad 56 und der Achse 52 bzw. der Lagerbuchse 54 unterstützt wird. Die Relativbewegung 45 wird durch eine Drehung um eine Drehachse 55 der Lageranordnung 50 hervorgerufen. Zum Erfassen des Verschleißzustandes ist der Verschleißsensor 10 im Wesentlichen radial, also senkrecht zur Drehachse 55, in der Achse 52 und der Lagerbuchse 54 aufgenommen. Im Betrieb der Lageranordnung 50 tritt das Zahnrad 56 als Verschleißgegenstück 30 mit der Lagerbuchse 54 als verschleißbehafteter Komponente 20 in einen Verschleißkontakt 23 im Bereich des Verschleißsensors 10. Der Verschleißsensor 10 ist dabei gemäß einer der oben skizzierten Ausführungsformen ausgebildet. Der Verschleißsensor 10 gehört zu einem Überwachungssystem 70, das auch ein Erfassungsmittel 35 und eine Auswertungseinheit 40 umfasst. Das Erfassungsmittel 35 und die Auswertungseinheit 40 sind lösbar mit dem Verschleißsensor 10 verbunden, also austauschbar. Das Erfassungsmittel 35 ist zu einem Erfassen einer elektrischen Größe 33 ausgebildet, die durch einen nicht näher gezeigten Verschleißfortschritt 22 veränderlich ist. Die Auswertungseinheit 40 wiederum ist dazu ausgebildet, eine solche Änderung der elektrischen Größe 33 zu erfassen und darauf den Verschleißzustand, also den Verschleißfortschritt 22, zu ermitteln. Das Erfassungsmittel 35 und/oder die Auswertungseinheit 40 sind dazu ausgebildet, zumindest eine Ausführungsform des oben skizzierten Verfahrens 100 hierfür umzusetzen. Der Verschleißsensor 10 und sein Betriebsverhalten in der Lageranordnung 50 ist durch ein Computerprogrammprodukt 80 simulierbar. Das Computerprogrammprodukt 80 kann neben dem Verschleißsensor 10 selbst auch weitere Komponenten des Überwachungssystems 70 umfassen und dessen Betriebsverhalten mitsimulieren.

## Patentansprüche

1. Verschleißsensor (10) für eine verschleißbehaftete Komponente (20), umfassend eine Mehrzahl an Kontaktschichten (12, 12.1, 12.2, 12.3, 12.n), die zu einem Erfassen eines vorliegenden Verschleißzustands sequentiell verschleißbar angeordnet sind, **dadurch gekennzeichnet , dass** zumindest zwei Kontaktschichten (12, 12.1, 12.2, 12.3, 12.n) zu einem teilweise gleichzeitigen Verschleißen angeordnet sind.

2. Verschleißsensor (10) nach Anspruch 1, **dadurch gekennzeichnet , dass** die zumindest zwei Kontaktschichten (12, 12.1, 12.2, 12.3, 12.n) senkrecht zu einer Verschleißrichtung (25) teilweise gegenüberliegend angeordnet sind.

3. Verschleißsensor (10) nach Anspruch 1 oder 2, **da**- **durch gekennzeichnet** , dass die verschleißbehaftete Komponente (20) als Gleitlagerkomponente (51) ausgebildet ist.

4. Verschleißsensor (10) nach einem der Ansprüche 1 bis 3, **dadurch gekennzeichnet , dass** die mindestens zwei Kontaktschichten (12, 12.1, 12.2, 12.3, 12.n) über einen Zentralkontakt (14) elektrisch miteinander verbunden sind.

5. Verschleißsensor (10) nach einem der Ansprüche 1 bis 4, **dadurch gekennzeichnet , dass** die zumindest zwei Kontaktschichten (12, 12.1, 12.2, 12.3, 12.n) schraubenlinienförmig angeordnet sind.

6. Verschleißsensor (10) nach einem der Ansprüche 1 bis 4, **dadurch gekennzeichnet , dass** die zumindest zwei Kontaktschichten (12, 12.1, 12.2, 12.3, 12.n) jeweils in einem separaten Stapel (38) angeordnet sind.

7. Verschleißsensor (10) nach einem der Ansprüche 1 bis 6, **dadurch gekennzeichnet , dass** zumindest eine der Kontaktschichten (12, 12.1, 12.2, 12.3, 12.n) und/oder zumindest eine der Isolationsschichten (11) mittels Additiver Fertigung hergestellt ist.

8. Verschleißsensor (10) nach einem der Ansprüche 1 bis 7, **dadurch gekennzeichnet , dass** dem Verschleißsensor (10) zumindest ein Erfassungsmittel (35) zu einem Erfassen einer elektrischen Größe (33) in zumindest einem Stromkreis (32) ausgebildet ist, der durch das Verschleißen einer der Kontaktschichten (12, 12.1, 12.2, 12.3, 12.n) unterbrechbar ist.

9. Verschleißsensor (10) nach einem der Ansprüche 1 bis 8, **dadurch gekennzeichnet , dass** zumindest eine der Kontaktschichten (12, 12.1, 12.2, 12.3, 12.n) eine Schichtdicke (19) von 100 nm bis 1000 nm, vorzugsweise eine Schichtdicke (19) von 400 nm bis 600 nm aufweist.

10. Verfahren (100) zum Erfassen eines Verschleißzustands einer verschleißbehafteten Komponente (20) mittels eines Verschleißsensors (10), umfassend die Schritte:
a) Herstellen eines Betriebs der verschleißbehafteten Komponente (20) mit einem Verschleißgegenstück (30);
b) Verschleißen einer ersten Kontaktschicht (12.1) mittels des Verschleißgegenstücks (30);
c) Verschleißen einer zweiten Kontaktschicht (12.2) mittels des Verschleißgegenstücks (30);
d) Erfassen einer elektrischen Größe (33) in einem Stromkreis (32), der die erste und/oder zweite Kontaktschicht (12.1, 12.2) umfasst;
e) Erkennen eines Fortschreitens einer Verschleißfront (27) anhand der elektrischen Größe (33), wenn die erste und/oder zweite Kontaktschicht (12.1, 12.2) vom Verschleißgegenstück (30) durchtrennt wird;
**dadurch gekennzeichnet, dass** die Schritte b) und c) teilweise gleichzeitig durchgeführt werden.

11. Verfahren (100) nach Anspruch 10, **dadurch ge** - **kennzeichnet**, dass die Schritte a) bis e) zumindest auch mit der zweiten Kontaktschicht (12.2) und einer dritten Kontaktschicht (12.3) durchgeführt werden.

12. Überwachungssystem (70) für eine verschleißbehaftete Komponente (20), umfassend einen Verschleißsensor (10), der mit einer Auswertungseinheit (40) verbunden ist, **dadurch gekennzeichnet , dass** der Verschleißsensor (10) nach einem der Ansprüche 1 bis 10 ausgebildet ist und/oder die Auswertungseinheit (40) zu einem Durchführen eines Verfahrens (100) nach einem der Ansprüche 10 oder 11 ausgebildet ist.

13. Lageranordnung (50), umfassend eine Achse (52) als verschleißbehafteter Komponente (20), auf der drehbar ein Zahnrad (56) als Verschleißgegenstück (30) angeordnet ist, und die Achse (52) mit einem Verschleißsensor (10) ausgestattet ist, **dadurch gekennzeichnet , dass** der Verschleißsensor (10) nach einem der Ansprüche 1 bis 9 ausgebildet ist.

14. Planetengetriebe (60), umfassend einen Planetenträger (62) mit mindestens einer Planetenradachse (53), an der ein Planetenrad (64) mittels einer Lageranordnung (70) drehbar angeordnet ist, **dadurch gekennzeichnet, dass** die Lageranordnung (70) nach Anspruch 13 ausgebildet ist.

15. Computerprogrammprodukt (80) zum Simulieren eines Betriebsverhaltens eines Verschleißsensors (10) in einer Lageranordnung (70), **dadurch gekennzeichnet, dass** der Verschleißsensor (10) nach einem der Ansprüche 1 bis 10 ausgebildet ist.
